# EUROPÄISCHE PATENTSCHRIFT

(11) **EP 2 734 426 B1**
(45) Veröffentlichungstag und Bekanntmachung des Hinweises auf die Patenterteilung: **13.07.2016**
(21) Anmeldenummer: 12724974.6
(22) Anmeldetag: 29.05.2012
(51) Int. Cl.: B60T 8/36, F16K 31/06

(54) **ELEKTROMAGNETISCH BETÄTIGBARES VENTIL**
ELECTROMAGNETICALLY ACTUABLE VALVE
SOUPAPE À COMMANDE ÉLECTROMAGNÉTIQUE

(30) Priorität: 22.07.2011 DE 102011079629
(43) Veröffentlichungstag der Anmeldung: 28.05.2014
(73) Patentinhaber: Robert Bosch GmbH, 70442 Stuttgart (DE)
(72) Erfinder: HEYER, Klaus, 71691 Freiberg (DE); KAESTNER, Frank, 74321 Bietigheim-Bissingen (DE); ALAZE, Norbert, 71706 Markgroeningen (DE); KRATZER, Dietmar, 71732 Tamm (DE)
(86) Internationale Anmeldenummer: PCT/EP2012/060058
(87) Internationale Veröffentlichungsnummer: WO 2013/013866

(56) Entgegenhaltungen:
- WO-A1-03/093083
- DE-A1- 19 611 886
- DE-A1-102009 055 232
- JP-A- 2000 046 228

## Beschreibung

Die Erfindung betrifft ein elektromagnetisch betätigbares Ventil, insbesondere für Kraftfahrzeuge, gemäß dem Oberbegriff des Anspruchs 1.

### Stand der Technik

Ventile der eingangs genannten Art sind aus dem Stand der Technik bekannt, beispielsweise als Dosier- oder Einspritzventile für Kraftfahrzeuge. So offenbart beispielsweise die Druckschrift EP 1 232 082 B1 ein elektromagnetisch betätigbares Ventil mit einer Hülse, in der ein Magnetkern fest und ein ein Ventilelement betätigender Magnetanker axial verlagerbar angeordnet sind. Das Ventilelement wirkt dabei mit einer Ventilöffnung zum Verschließen oder Freigeben der Ventilöffnung zusammen und ist mit dem Magnetanker derart verbunden, dass es sich, wenn der Magnetanker von dem Magnetkern angezogen wird, von der Ventilöffnung löst und dadurch diese freigibt. Zwischen dem Magnetanker und dem Magnetkern wirken dabei zwei Federelemente, die im Wesentlichen zur Rückstellung des Magnetankers dienen, wodurch die Ventilöffnung im stromlosen beziehungsweise unbestromten Zustand des Ventils geschlossen wird/ist. Eines der Federelemente ist dabei als Scheibenfeder ausgebildet, die die Ankerstirnfläche des Magnetankers, also die dem Magnetkern zugewandte Stirnfläche des Magnetankers, zumindest bei einer Betätigung des Ventils mit einer Federkraft beaufschlagt. Die Scheibenfeder ist dabei zwischen der Kernstirnfläche, also der dem Magnetanker zugewandten Stirnfläche des Magnetkerns, und der Ankerstirnfläche gehalten, sodass sich die Scheibenfeder an dem Magnetkern abstützt, um den Magnetanker mit einer Federkraft beaufschlagen zu können.

Aus der Offenlegungsschrif DE 196 11 886 A1 ist außerdem ein Magnetventil mit einer Hülse, die einen Axialanschlag für ein Federelement aufweist, bekannt. Der Axialanschlag wird dabei durch eine Durchmesserverjüngung der Hülse gebildet. Ferner ist aus der Offenlegungsschrif JP 2000-046228 A ein Magnetventil bekannt, das ein sich an einer Hülse abstützendes Federelement aufweist.

### Offenbarung der Erfindung

Das erfindungsgemäße Ventil zeichnet sich durch die Merkmale des Anspruchs 1 aus. Es hat den Vorteil, dass die Kernstirnfläche im Wesentlichen frei gestaltet werden kann, ohne Rücksicht auf die dazwischen liegende Scheibenfeder beziehungsweise deren Anlagestelle auf der Kernstirnfläche nehmen zu müssen. Dadurch kann die Kernstirnfläche im Hinblick auf den Magnetkraftfluss optimal gestaltet werden.

Das erfindungsgemäße Ventil zeichnet sich dabei dadurch aus, dass sich das Federelement an der Hülse abstützt. Statt also, wie bisher, eine Lagerstelle für das Federelement beziehungsweise die Scheibenfeder an dem Magnetkern vorzusehen, liegt die Scheibenfeder derart an der Hülse an, dass sie sich daran abstützt. Vorzugsweise stützt sich die Scheibenfeder reib- beziehungsweise kraftschlüssig an der Hülse ab. Hierzu ist die Scheibenfeder beispielsweise unter elastischer und/oder plastischer Verformung in die Hülse eingepresst angeordnet. Dies erlaubt eine besonders einfache Montage und Herstellung des Ventils. Besonders bevorzugt ist es jedoch, wenn das Federelement sich formschlüssig an der Hülse abstützt, da dann auch hohe Kräfte sicher übertragen werden können, ohne dass sich das Federelement aus seiner Position beziehungsweise von der Abstützstelle lösen kann.

Erfindungsgemäß weist dazu die Hülse einen Axialanschlag auf. Der Axialanschlag ist auf der Innenseite der Hülse vorzugsweise derart angeordnet, dass er axial zwischen dem Magnetanker und dem Magnetkern oder auf Höhe der Kernstirnfläche liegt. Natürlich ist es auch denkbar, dass der Axialanschlag bezüglich der Kernstirnfläche zurückgesetzt angeordnet ist, wobei dann der Kern an dieser Stelle eine entsprechende seitliche Aussparung aufweisen müsste, an welcher der Axialanschlag der Hülse einliegt. Der Axialanschlag ist bevorzugt als separates Bauteil an der Hülse befestigt oder einstückig mit der Hülse ausgebildet.

Gemäß einer vorteilhaften Weiterbildung der Erfindung ist vorgesehen, dass die Hülse zur Bildung des Axialanschlags eine Durchmesserverjüngung aufweist. Durch die Durchmesserverjüngung wird in der Hülse eine Schulter gebildet, die als Axialanschlag dient. Verjüngt sich der Durchmesser entlang des gesamten Umfangs der Hülse, so wird hierdurch eine ringförmige, insbesondere kreisringförmige Schulter und damit ein ringförmiger beziehungsweise kreisringförmiger Axialanschlag geboten, auf welchem das Federelement sich abstützt. Die Durchmesserverjüngung kann sich dabei nur lokal über einen schmalen Axialbereich der Hülse erstrecken, sodass vor und hinter der Durchmesserverjüngung die Hülse den gleichen Durchmesser aufweist, oder sie kann durch eine gestufte Ausbildung der Hülse mit zwei unterschiedlichen Durchmessern definiert sein. Vorzugsweise wird der Axialanschlag durch eine Verformung der Mantelwand der Hülse erzeugt.

Erfindungsgemäß weist die Hülse zur Bildung des Axialanschlags wenigstens eine umlaufende Sicke auf. Die Sicke kann beispielsweise durch nachträgliches Rollieren der Hülse oder dergleichen erzeugt werden. Alternativ ist es auch denkbar, in Umfangsrichtung gesehen die Sicke nur bereichsweise vorzusehen, sodass die Hülse abschnittsweise nach innen verjüngt ist und dadurch mehrere Axialanschläge aufweist.

Alternativ zum Vorsehen einer oder mehrerer umlaufender Sicken ist erfindungsgemäß vorgesehen, dass die Hülse zum Bilden des Axialanschlags wenigstens eine, insbesondere mehrere über den Umfang der Hülse insbesondere gleichmäßig verteilt angeordnete Längssicken aufweist. Zweckmäßigerweise enden oder beginnen die Längssicken auf gleicher Höhe, dort wo der Axialanschlag vorgesehen sein soll. Weiterhin ist es denkbar, dass die Längssicken zusätzlich zu einer oder mehreren umlaufenden Sicken vorgesehen sind, wodurch die Stabilität beziehungsweise Steifigkeit der Hülse verbessert wird. Die Längssicken und auch die Umlaufsicken werden bevorzugt durch einen Prägeprozess in die Hülse eingebracht.

Vorzugsweise ist die Hülse im Bereich des Axialanschlags zur Versteifung der Hülse plastisch verformt. Wie oben bereits erwähnt, können hierzu die eine oder die mehreren Längssicken vorgesehen werden. Ebenso können durch Bördeln oder Verpressen erzeugte Bereiche der Hülse dem Axialanschlag zugeordnet sein.

Zusätzlich oder alternativ ist vorzugsweise vorgesehen, dass die Hülse zumindest im Bereich des Axialanschlags wärmebehandelt ist. Hierdurch wird erreicht, dass die Hülse zumindest im Bereich des Axialanschlags eine höhere Steifigkeit aufweist, sodass auch bei einer hohen Lebensdauer des Ventils das Federelement einen sicheren Stützpunkt an dem Axialanschlag findet.

Gemäß einer vorteilhaften Weiterbildung der Erfindung ist vorgesehen, dass auf der Außenseite der Hülse wenigstens ein dem Axialanschlag zugeordnetes Versteifungselement angeordnet ist. Das Versteifungselement ist zweckmäßigerweise an der Hülse befestigbar/befestigt, sodass es die Form der Hülse auch bei einer hohen Belastung zumindest im Bereich des Axialanschlags erhält. Besonders bevorzugt ist dazu das Versteifungselement auf der dem Federelement gegenüberliegenden Seite des Axialanschlags auf der Außenseite der Hülse angeordnet, sodass sich die Rückseite des Axialanschlags an dem Versteifungselement abstützt.

Besonders bevorzugt ist das Versteifungselement als Versteifungsring ausgebildet, der auf die Hülse aufgeschoben ist. Dabei entspricht der Innendurchmesser des Rings zumindest im Wesentlichen dem Außendurchmesser der Hülse jenseits des Axialanschlags vom Magnetanker aus gesehen. Bevorzugt entspricht die Innenkontur des Versteifungsrings der Außenkontur der Hülse im Bereich des Axialanschlags. Gegebenenfalls werden die Durchmesser derart gewählt, dass der Versteifungsring auf die Hülse aufpressbar ist, wodurch dieser kraftschlüssig an dieser befestigt wird. Natürlich können aber auch weitere Befestigungsmittel, beispielsweise wie eine Verschraubung, Verklebung oder Verschweißung vorgesehen sein, um die Anordnung des Versteifungselements beziehungsweise Versteifungsrings auf der Hülse zu gewährleisten. Bei dem Versteifungselement kann es sich auch um ein Montageelement des Ventils handeln. So kann das Versteifungselement beispielsweise von einem Karosserieteil oder dem Gehäuse einer Baueinheit gebildet werden, an welchem das Ventil befestigt wird beziehungsweise ist.

Im Folgenden soll die Erfindung anhand der Zeichnung näher erläutert werden. Dazu zeigen
Figur 1 ein bekanntes Magnetventil,
Figur 2 das Magnetventil mit einem Axialanschlag für ein Federelement,
Figur 3 das Ventil gemäß Figur 2 mit einem zusätzlichen Versteifungselement,
Figur 4 das Ventil mit einer umlaufenden Sicke in der Hülse,
Figur 5 das Ventil mit einem topfförmigen Federelement und
Figur 6 das Ventil mit einer Längssicke, jeweils in einer Längsschnittdarstellung.

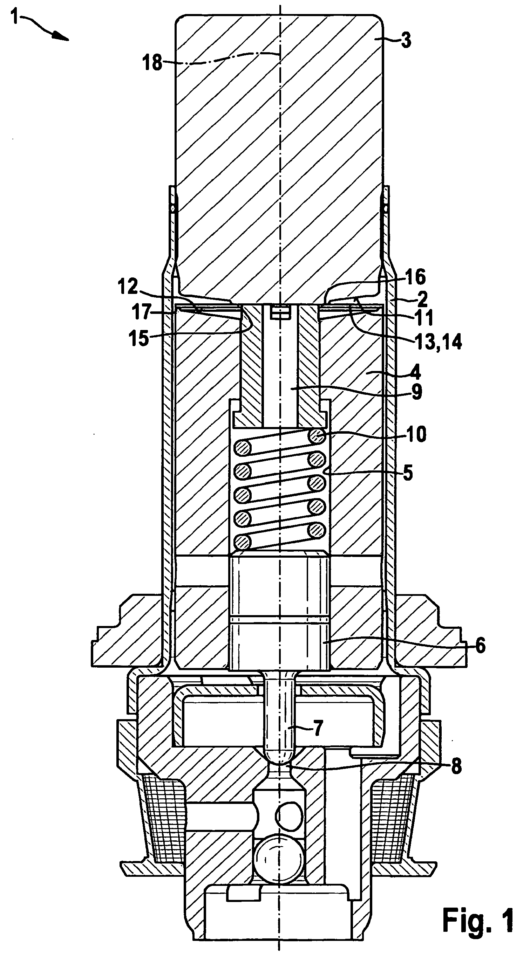

Figur 1 zeigt in einer Längsschnittdarstellung ein elektromagnetisch betätigbares Ventil 1, das insbesondere in Hydrauliksystemen von Kraftfahrzeugen verbaubar ist. Das Ventil 1 weist eine im Wesentlichen zylinderförmige Hülse 2 auf, welche an einem Ende einen Magnetkern 3 trägt, der fest mit der Hülse 2 verbunden ist. Dem Magnetkern 3 ist eine hier nicht näher dargestellte Spule zugeordnet, durch deren Bestromung der Magnetkern 3 einen in der Hülse axial verlagerbar angeordneten Magnetanker 4 anzieht.

Der Magnetanker 4 weist eine gestufte Durchgangsbohrung 5 auf, in welcher an der dem Magnetkern 3 abgewandten Seite ein Ventilelement 6 gehalten ist, das eine Ventilspitze 7 aufweist, die mit einem Ventilsitz beziehungsweise mit einer Ventilöffnung 8 zum Verschließen oder Freigeben eines Durchströmungsquerschnitts zusammenwirkt. In der Durchbohrung 5 ist weiterhin ein axial verlagerbares Druckstück 9 gehalten, das einendig von einem als Schraubenfeder 10 ausgebildeten Federelement beaufschlagt ist, welches sich einendig an dem Ventilelement 6 abstützt, und anderendig an dem Magnetkern 3. Der Magnetkern 3 weist hierbei eine dem Magnetanker 4 zugewandte, rotationssymmetrische Kernstirnfläche 11 auf, und der Magnetanker 4 eine dem Magnetkern 3 zugewandte, rotationssymmetrische Ankerstirnfläche 12. Das Druckstück 9 ragt über die Ankerstirnfläche 12 hinaus und liegt an der Kernstirnfläche 11 mittig an.

Zwischen dem Magnetkern 3 und dem Magnetanker 4 ist ein weiteres, elastisch verformbares Federelement 13 vorgesehen, das vorliegend als rotationssymmetrische Scheibenfeder 14 ausgebildet und zwischen der Kernstirnfläche 11 und der Ankerstirnfläche 12 verspannt beziehungsweise vorgespannt gehalten ist. In der dargestellten Ausgangsstellung, also im unbetätigten Zustand, muss das Federelement 13 jedoch nicht unbedingt vorgespannt beziehungsweise verspannt gehalten sein. Die Ausbildung kann gemäß einer alternativen Ausführungsform auch derart erfolgen, dass das Federelement 13 erst bei Betätigung des Ventils 1 zwischen den beiden Stirnflächen 11 und 12 verspannt wird. Die Scheibenfeder 14 weist mittig eine Öffnung 15 auf, durch welche das Druckstück 9 hindurchragt, um an der Kernstirnfläche 11 anzuliegen.

Die Kernstirnfläche 11 weist dabei mittig einen Bereich auf, in welchem sich die Kernstirnfläche 11 senkrecht zur Achse des Ventils 1 erstreckt, und auf welcher das Druckstück 9 aufliegt. Dieser Bereich weist einen Radius auf, der über das Druckstück 9 hinausgeht und somit eine Auflagefläche für die Scheibenfeder 14 bildet. Der Magnetanker 4 weist an seiner Ankerstirnfläche 12 einen Außenbereich auf, in welchem die Ankerstirnfläche 12 ebenfalls im Wesentlichen senkrecht zur Achse 18 des Ventils (durch eine Strich-Punkt-Linie angedeutet) ausgerichtet ist. Dieser Bereich ist dabei ringförmig ausgebildet und liegt am äußersten Rand der Ankerstirnfläche 12. Auf diesem Bereich liegt die Scheibenfeder 14 mit ihrem äußeren Randbereich auf. Die Scheibenfeder 14 bildet somit mit dem Magnetanker 4 und dem Magnetkern 3 jeweils einen Anlagepunkt 16 beziehungsweise 17, die in dem vorliegenden Ausführungsbeispiel als ringförmige Auflageflächen ausgebildet sind. Im Übrigen sind die Kernstirnfläche 11 und die Ankerstirnfläche 13 in Radialerstreckung, also ausgehend von der Achse des Ventils 1, schräg verlaufend ausgebildet, wobei die schräg verlaufenden Bereiche im Wesentlichen parallel zueinander verlaufen, sodass die Kernstirnfläche 11 und die Ankerstirnfläche 12 insoweit komplementär ausgebildet sind.

Im Betrieb, wenn das Magnetventil bestromt beziehungsweise betätigt wird, zieht der Magnetkern 3 den Magnetanker 4 an, wodurch die dazwischen verspannt gehaltene Scheibenfeder 14 verformt wird und dadurch eine Federkraft erzeugt, die zwischen Magnetkern 3 und Magnetanker 4 wirkt. Wird das Magnetventil deaktiviert beziehungsweise die Stromzufuhr beendet, so drängt das Federelement 13 beziehungsweise die Scheibenfeder 14 den Magnetanker 4 zurück in seine die Ventilöffnung verschließende Ausgangsposition.

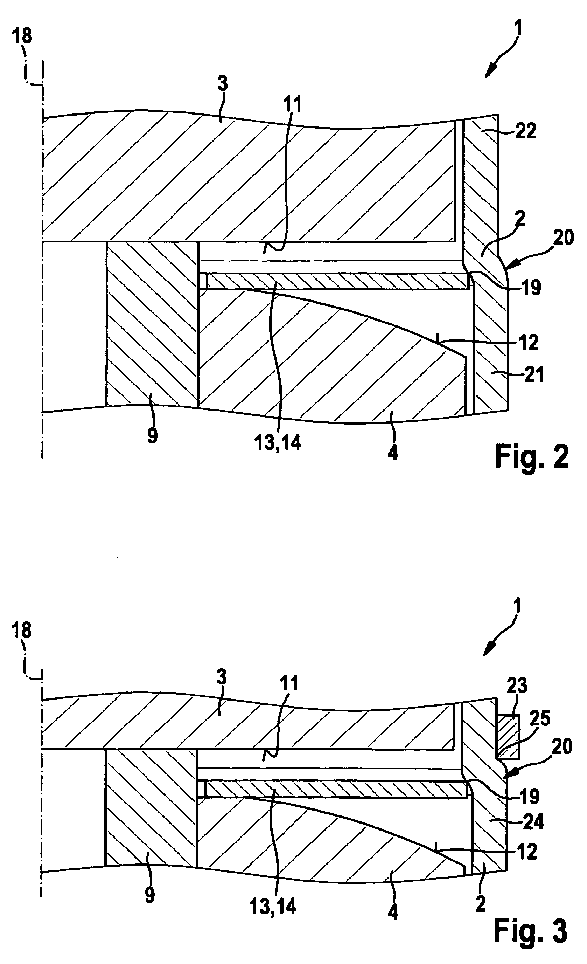

Figur 2 zeigt in einer vergrößerten Detailansicht der Längsschnittdarstellung eine vorteilhafte Weiterbildung des Ventils 1 im Sinne der Erfindung. Dabei ist vorgesehen, dass sich das Federelement 13 beziehungsweise die Scheibenfeder 14 mit ihrem Außenrand an der Hülse 2 abstützt. Dazu weist die Hülse 2 einen Axialanschlag 19 auf, der von einer Durchmesserverjüngung 20 gebildet ist. Hierbei ist die Hülse 2 gestuft ausgebildet, mit einem ersten Abschnitt 21 im Bereich des Magnetankers 4, und einem zweiten Abschnitt 22 im Bereich des Magnetkerns 3, wobei der Abschnitt 21 einen größeren Durchmesser aufweist als der Abschnitt 22, sodass die den Übergang von dem einen Abschnitt 21 zu dem anderen Abschnitt 22 bildende Durchmesserverjüngung 20 den Axialanschlag 19 in Form einer umlaufenden Schulter für das Federelement 13 bildet, die sich über den gesamten Umfang der Hülse 2 erstreckt, sodass das Federelement 13 mit seinem gesamten Außenrand an dem Axialanschlag 19 anliegt.

Hierdurch wird erreicht, dass die Gestaltung der Kernstirnfläche 11 des Magnetankers 3 frei erfolgen kann, zumindest aber ohne einen Anschlag für das Federelement 13 berücksichtigen zu müssen. So ist es denkbar, die Kernstirnfläche 11 eben, wie dargestellt, oder gekrümmt oder winkelig im Längsschnitt gesehen auszubilden. Hierdurch können sich insbesondere Kostenvorteile bei der Herstellung des Ventils ergeben. Darüber hinaus befindet sich die Federscheibe dadurch nicht in einem direkten Kontakt zu dem Polbeziehungsweise Magnetkern 3, was für den Magnetfluss von Vorteil sein kann. Das Federelement 13 selbst kann magnetisch oder nicht-magnetisch ausgebildet sein. Durch die magnetische Ausbildung und die vorliegende Ausbildung des Ventils wird der Magnetfluss weniger stark beeinflusst wie bei einem Ventil, bei welchem die Federscheibe 14 an dem Magnetkern 3 anliegt.

Figur 3 zeigt eine vorteilhafte Weiterbildung, bei welcher dem Axialanschlag 19 ein Versteifungselement 23 zugeordnet ist, das auf der dem Axialanschlag 19 gegenüberliegenden Seite der Mantelwand 24 der Hülse 2 angeordnet ist. Durch die gestufte Ausbildung der Hülse 2 liegt das Versteifungselement 23 auf dem rückseitigen, durch die Querschnittsverjüngung entstandenen Vorsprung 25 der Hülse 2 auf, und stützt somit die Hülse 2 im Bereich der Durchmesserverjüngung 20, sodass auch hohe Belastungen von der Hülse 2 beziehungsweise hohe Federkräfte aufgenommen werden können. Das hier als Versteifungsring ausgebildete Versteifungselement 23 ist auf die Hülse 2 aufgeschoben und mit dieser beispielsweise durch Verschweißen, Verkleben oder dergleichen fest verbunden. Auch ist es denkbar, den Versteifungsring beziehungsweise das Versteifungselement 23 an der Hülse 2 zu verschrauben. Hierzu können eine oder mehrere Schraubverbindungen vorgesehen sein. Bevorzugt weist jedoch das Versteifungselement 23 ein Innengewinde und die Hülse 2 ein Außengewinde auf, sodass der Versteifungsring 23 direkt auf die Hülse 2 aufschraubbar ist.

Vorteilhaft ist es auch, wenn die Innenkontur des Versteifungsrings der Außenkontur der Hülse 2 im Bereich des Axialanschlags 19 entspricht. So ist die Innenkontur des Versteifungselements 23 zweckmäßigerweise entsprechend der Außenkontur der Hülse 2 geformt, sodass auch die Innenkontur des Versteifungselements 23 eine Durchmesserverjüngung aufweist.

Natürlich ist es auch denkbar, dass das Versteifungselement 23 beziehungsweise der dargestellte Versteifungsring anstelle des Rechteckprofils - wie dargestellt - ein Profil aufweist, das eine an die Hülse 2 angeschmiegte Geometrie, insbesondere ohne scharfe Kanten, aufweist.

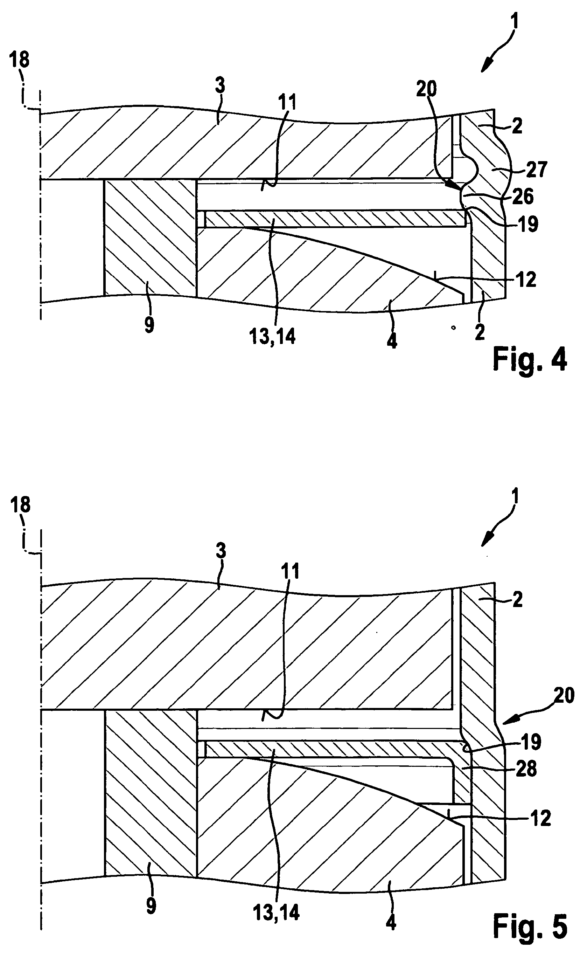

Figur 4 zeigt ein weiteres Ausführungsbeispiel, das sich von dem vorhergehenden Ausführungsbeispiel dahingehend unterscheidet, dass die Hülse 2 zum Bilden der Durchmesserverjüngung 20 nicht, wie zuvor beschrieben, gestuft ausgebildet ist, sondern eine umlaufende Sicke 26 aufweist. Die Sicke 26 erstreckt sich über den gesamten Umfang der Hülse 2, sodass die Hülse 2 durchgehend im Wesentlichen den gleichen Durchmesser aufweist, und nur durch die Sicke 26 bereichsweise verjüngt ist, wobei, wie dargestellt, das Federelement 13 sich an dem durch die Sicke 26 gebildeten Axialanschlag 19 abstützt.

Zur Versteifung der Konstruktion ist oberhalb der Sicke 26, die nach innen gerichtet ist, eine weitere Sicke 27 vorgesehen, die jedoch nach außen gerichtet ist. Die zweite Sicke 27 erhöht die Steifigkeit und Festigkeit des Axialanschlags 19 und damit die des Ventils 1.

Figur 5 zeigt in einem weiteren Ausführungsbeispiel eine vorteilhafte Weiterbildung der Scheibenfeder 14. Im Unterschied zu den vorhergehenden Ausführungsbeispielen weist die Scheibenfeder 14 hierbei einen umgebogenen Außenrand 28 auf, sodass die Scheibenfeder eine topfförmige Ausbildung erhält. Der Außenrand 28 ist dabei in Richtung des Magnetankers 4, also in den Darstellungen nach unten, umgebogen, sodass sich die Federscheibe 14 mit der dadurch geformten Kante an der Innenseite der Hülse 2 und an dem Axialanschlag 19 abstützt. Hierdurch wird die Führung der Scheibenfeder 14 verbessert. Vorzugsweise erfolgt das Umformen der Federscheibe 14 durch einen Bördelvorgang. Hierdurch wird die Federscheibe 14 außerdem steifer.

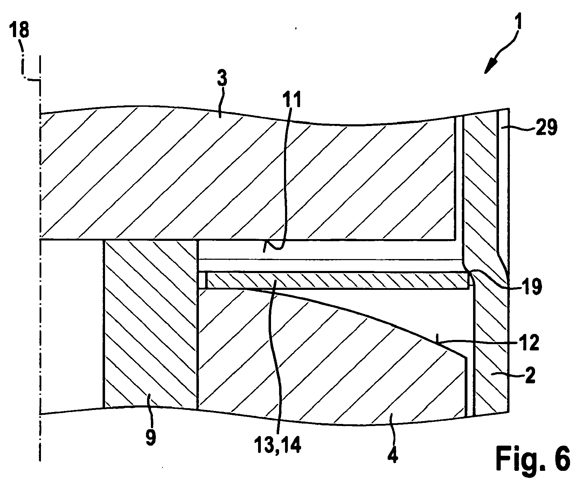

Figur 6 zeigt ein weiteres Ausführungsbeispiel des Ventils 1, das im Wesentlichen den Ausführungsbeispielen gemäß der Figuren 2 und 4 entspricht. Im Unterschied zu den vorhergehenden Ausführungsbeispielen ist jedoch vorgesehen, das der Axialanschlag 19 nicht umlaufend durch eine Sicke oder eine gestufte Ausbildung der Hülse 2, sondern durch mehrere über den Umfang verteilt angeordnete Längssicken 29 gebildet wird. Die Längssicken 29 enden auf der gleichen Höhe der Hülse 2, sodass die über den Umfang verteilt gebildeten Axialanschläge 19 auf der gleichen Höhe liegen und somit die Federscheibe 14 die gewünschte Position und Ausrichtung erhält und sich entsprechend an dem Axialanschlag 19 der Hülse 2 abstützen kann.

Wie aus den Figuren 2 bis 6 ersichtlich, wird die Federscheibe 14 vorteilhafterweise zwischen der Ankerstirnfläche 12 und dem Axialanschlag 19 der Hülse 2 zumindest bei einer Betätigung des Ventils 1 verspannt beziehungsweise verspannt gehalten, wobei der Axialanschlag 19 auf unterschiedliche Art und Weise realisierbar ist. Natürlich lassen sich die oben beschriebenen Ausführungsbeispiele auch miteinander kombinieren, sodass beispielsweise bei einer Ausführungsform gemäß Figur 4 zusätzlich ein Versteifungselement, wie im Ausführungsbeispiel gemäß Figur 3 beschrieben wurde, vorgesehen ist. Ebenso lässt sich bei allen Ausführungsbeispielen die Scheibenfeder 14, wie in Figur 5 dargestellt, mit einem umgebogenen Außenrand versehen. Natürlich ist es auch denkbar, anstelle der Scheibenfeder 14 ein anders geartetes Federelement 13 vorzusehen, das zwischen der Ankerstirnfläche 12 und dem jeweiligen Axialanschlag 19 verspannbar/vorgespannt ist, wie beispielsweise eine oder mehrere Blattfedern oder Schraubenfedern. Ebenso ist es denkbar, dass die Scheibenfeder 14 aus einem magnetischen Material besteht, um einen gewünschten Magnetfluss zu erhalten. Natürlich können aber auch nicht magnetische Materialien für die Scheibenfeder 14 vorgesehen sein.

## Patentansprüche

1. Elektromagnetisch betätigbares Ventil (1), insbesondere für Kraftfahrzeuge, mit einer Hülse (2), in der ein Magnetkern (3) fest und ein ein Ventilelement (6) betätigender Magnetanker (4) axial verlagerbar angeordnet sind, wobei mindestens ein Federelement (13) vorgesehen ist, das die dem Magnetkern (3) zugewandte Ankerstirnfläche (12) des Magnetankers (4) zumindest bei einer Betätigung des Ventils (1) mit einer Federkraft beaufschlagt und sich an einem Axialanschlag (19) der Hülse (2) abstützt, **dadurch gekennzeichnet, dass** die Hülse (2) zur Bildung des Axialanschlags (19) wenigstens eine, zumindest bereichsweise umlaufende Sicke (26) aufweist, oder dass die Hülse (2) zum Bilden des Axialanschlags (19) wenigstens eine Längssicke (29), insbesondere mehrere über den Umfang der Hülse (2) verteilt angeordnete Längssicken (29) aufweist.

2. Ventil nach Anspruch 1, **dadurch gekennzeichnet, dass** das Federelement (13) als Federscheibe (14) ausgebildet ist und zumindest bereichsweise an seinem Außenrand (28) umgebogen ist, insbesondere einen gebördelten Außenrand (28) aufweist.

3. Ventil nach einem der vorhergehenden Ansprüche, **dadurch gekennzeichnet, dass** die Hülse (2) im Bereich des Axialanschlags (19) zu ihrer Versteifung plastisch verformt ist.

4. Ventil nach einem der vorhergehenden Ansprüche, **dadurch gekennzeichnet, dass** die Hülse (2) zumindest im Bereich des Axialanschlags (19) wärmebehandelt ist.

5. Ventil nach einem der vorhergehenden Ansprüche, **dadurch gekennzeichnet, dass** auf der Außenseite der Hülse (2) wenigstens eine dem Axialanschlag (19) zugeordnetes Versteifungselement (23) angeordnet ist.

6. Ventil nach Anspruch 5, **dadurch gekennzeichnet, dass** das Versteifungselement (23) als Versteifungsring ausgebildet ist.

## Claims

1. Electromagnetically actuable valve (1), in particular for motor vehicles, with a sleeve (2) in which a magnet core (3) is arranged fixed and an armature (4) actuating a valve element (6) is arranged such that it can be moved axially, there being provided at least one spring element (13) which, at least upon actuation of the valve (1), exerts a spring force on the armature end face (12) of the armature (4) oriented towards the magnet core (3), and which bears against an axial end stop (19) of the sleeve (2), **characterized in that** the sleeve (2) has, for forming the axial end stop (19), at least one bead (26) which is circumferential at least in certain regions, or **in that** the sleeve (2) has, for forming the axial end stop (19), at least one longitudinal bead (29), in particular multiple longitudinal beads (29) distributed over the circumference of the sleeve (2).

2. Valve according to Claim 1, **characterized in that** the spring element (13) is formed as a spring washer (14) and is bent, at least in certain regions, at its outer rim (28), in particular has a flanged outer rim (28).

3. Valve according to either of the preceding claims, **characterized in that,** for stiffening, the sleeve (2) is plastically deformed in the region of the axial end stop (19).

4. Valve according to one of the preceding claims, **characterized in that** the sleeve (2) is heat-treated, at least in the region of the axial end stop (19).

5. Valve according to one of the preceding claims, **characterized in that** at least one stiffening element (23), assigned to the axial end stop (19), is arranged on the outer side of the sleeve (2).

6. Valve according to Claim 5, **characterized in that** the stiffening element (23) is formed as a stiffening ring.

## Revendications

1. Soupape à commande électromagnétique (1), en particulier pour véhicules automobiles, comprenant une douille (2) dans laquelle sont disposés de manière déplaçable axialement un induit magnétique (4) actionnant un élément de soupape (6) et de manière fixe un noyau magnétique (3), au moins un élément de ressort (13) étant prévu, lequel sollicite avec une force de ressort la surface frontale d'induit (12) de l'induit magnétique (4) tournée vers le noyau magnétique (3) au moins lors d'un actionnement de la soupape (1) et s'appuie sur une butée axiale (19) de la douille (2), **caractérisée en ce que** la douille (2), pour former la butée axiale (19), présente au moins une moulure (26) s'étendant au moins en partie sur la périphérie, ou **en ce que** la douille (2), pour former la butée axiale (19), présente au moins une moulure longitudinale (29), en particulier plusieurs moulures longitudinales (29) réparties sur la périphérie de la douille (2).

2. Soupape selon la revendication 1, **caractérisée en ce que** l'élément de ressort (13) est réalisé sous forme de rondelle élastique (14) et est recourbé au moins en partie au niveau de son bord extérieur (28), en particulier présente un bord extérieur bordé (28).

3. Soupape selon l'une quelconque des revendications précédentes, **caractérisée en ce que** la douille (2) est déformée plastiquement dans la région de la butée axiale (19) en vue de sa rigidification.

4. Soupape selon l'une quelconque des revendications précédentes, **caractérisée en ce que** la douille (2) est traitée à chaud au moins dans la région de la butée axiale (19).

5. Soupape selon l'une quelconque des revendications précédentes, **caractérisée en ce qu'**au moins un élément de rigidification (23) associé à la butée axiale (19) est disposé sur le côté extérieur de la douille (2).

6. Soupape selon la revendication 5, **caractérisée en ce que** l'élément de rigidification (23) est réalisé sous forme de bague de rigidification.
